# EUROPEAN PATENT APPLICATION

(11) **EP 4 648 189 A1**
(43) Date of publication of application: **12.11.2025**
(21) Application number: 24174571.0
(22) Date of filing: 07.05.2024
(51) Int. Cl.: H01M 50/209, H01M 50/211, H01M 50/238

(54) **BATTERY SYSTEM WITH DEFORMABLE END PLATE**

(71) Applicant: Samsung SDI Co., Ltd., Yongin-si, Gyeonggi-do 17084 (KR)
(72) Inventor: BLODER, Martin, 8261 Sinabelkirchen (AT)
(74) Representative: Gulde & Partner

(57) **Abstract**

The present disclosure refers to a battery system (100) including a plurality of battery cells (12) arranged along a stacking axis (X) to form a cell stack (10), a cell stack frame (20) accommodating the cell stack (10), and an end plate (30, 30') disposed at an end of cell stack frame (20), the end plate (30, 30') including a plate element (32) in contact with the cell stack (10) and deformation structures (34, 34') extending from the plate element (32) at opposite sides thereof parallel to the stacking axis (X), each deformation structure (34, 34') including a first compression portion (36) and a first extension portion (37) that are connected in series and are arranged overlapping each other in a direction perpendicular to the stacking axis (X), wherein the end plate (30, 30'), in an assembly position, is supported by the cell stack frame (20) such that, while the first compression portion (36) is compressed and the first extension portion (37) is extended, the plate element (32) exerts a pressure onto the cell stack (10).

## Description

### Field of the Disclosure

The present disclosure relates to a battery system with a deformable end plate and to such an end plate. Further, the present invention relates to a vehicle including such a battery system and to a method of assembling such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is c0oupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first.

Even defects of small and/or cheap system parts might then require dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

The battery cells of a battery pack may be arranged to form a cell stack by stacking the battery cells onto each other or arranging the battery cells in a row along a stacking axis/direction. Neighboring battery cells of a cell stack may be distanced from one another via cell spacers. The cell stack may be placed inside a cell stack frame delimiting the battery cells to the outside. Known battery systems cannot adjust to the cell stacks inherent length tolerances, which in turn leads to a very large variance in the cell stacks initial compression force. This variance in pressure leads to a detrimental reduction of the battery packs long-term performance, especially as swelling phenomena over the lifetime also increase the variance in battery pack pressure conditions. To ensure optimal operation of the battery cells over their lifetime, it is important that a predefined pressure is exerted onto the battery cells by the cell stack frame to compensate for possible production tolerances and swelling of the battery cells.

Current battery systems typically include cell stack frames with end plates exerting pressure onto the cell stack with a rigid linear or progressive elastic pressure characteristic. A disadvantage of such rigid frameworks may be the susceptibility to length or positioning deviations because a small displacement may cause a steep increase or decrease of force applied on the cell stack, which in turn may reduce the stacks performance. To mitigate this, very precise and therefore expensive production tolerances have to be met, or other costly and intricate ways of adjusting the cell stacks pre-tension via positioning of the end plate during assembly have to be implemented. Such end plates may not be able to ensure that the right amount of pressure is applied to the cell stack over its entire lifetime.

It may thus be an object of the present application to provide a battery system with an improved end plate ensuring the right pressure conditions for optimal operation of the battery cells over their entire lifetime.

### Summary of Invention

The invention is defined by the appended claims. The description that follows is subjected to this limitation. Any disclosure lying outside the scope of said claims is only intended for illustrative as well as comparative purposes.

According to an aspect of the present disclosure, a battery system is provided including a plurality of battery cells arranged along a stacking axis to form a cell stack, a cell stack frame accommodating the cell stack, and an end plate disposed at an end of cell stack frame, the end plate including a plate element in contact with the cell stack and deformation structures extending from the plate element at opposite sides thereof parallel to the stacking axis, each deformation structure including a first compression portion and a first extension portion that are connected in series and are arranged overlapping each other in a direction perpendicular to the stacking axis, wherein the end plate, in an assembly position, is supported by the cell stack frame such that, while the first compression portion is compressed and the first extension portion is extended, the plate element exerts a pressure onto the cell stack.

According to an aspect of the present disclosure, at least one of the first compression portion and the first extension portion includes a grid structure.

According to an aspect of the present disclosure, the grid structure includes deformable arms delimiting grid cells and adapted to deform under influence of a deformation force, wherein, in the assembly position of the end plate, the deformable arms of the first compression portion deform such that a volume of the grid cells of the first compression portion is reduced and the deformable arms of the first extension portion deform such that a volume of the grid cells of the first extension portion is increased.

According to an aspect of the present disclosure, the deformation structure is S-shaped including the first compression portion, the first extension portion and a second compression portion arranged in series and overlapping each other.

According to an aspect of the present disclosure, the end plate includes snap-fit portions adapted to snap into corresponding recesses of the cell stack frame in the assembly position of the end plate.

According to an aspect of the present disclosure, the end plate includes end portions each disposed at a free end of one of the deformation structures, wherein the end portions are adapted to be pushed inwards towards the plate element from a pre-assembly position, in which the end portions extend through apertures in the cell stack frame, to the assembly position, where the end portions are supported at the cell stack frame.

According to an aspect of the present disclosure, the end plate includes engagement means disposed at a side of the plate element facing away from the cell stack, wherein the plate element is adapted to be pulled outwards via the engagement means, under deformation of the deformation structure , away from an interior space of the cell stack frame to insert the battery cells into the interior space of the cell stack frame, wherein the plate element is further adapted to be pushed inwards by the deformation structure into the assembly position when the plate element is released.

According to an aspect of the present disclosure, the end plate is formed as one-piece from a sheet material, for example from sheet metal.

An aspect of the present disclosure relates to an end plate for exerting pressure onto a cell stack of battery cells of a battery system, the end plate including a plate element for contacting the cell stack and deformation structures extending from the plate element at opposite sides thereof parallel to the stacking axis, each deformation structure including a first compression portion and a first extension portion that are connected in series and are arranged overlapping each other in a direction perpendicular to the stacking axis, wherein the end plate is adapted to, in an assembly position, be supported by a cell stack frame of the battery system such that, while the first compression portion is compressed and the first extension portion is extended, the plate element exerts a pressure onto the cell stack.

An aspect of the present disclosure relates to an electric vehicle including the battery system according to the disclosure.

An aspect of the present disclosure relates to a method for assembling a battery system according to the disclosure, wherein the method includes the steps of stacking the battery cells long the stacking axis to form the cell stack, inserting the cell stack into the cell stack frame, mounting the end plate at the cell stack frame such that, while the first compression portion is compressed and the first extension portion is extended, the plate element exerts a pressure onto the cell stack.

According to an aspect of the present disclosure, the method further includes inserting the end plate into the cell stack frame such that end portions disposed at respective free ends of the deformation structures extend through apertures in the cell stack frame, before inserting the cell stack into the cell stack frame, wherein the mounting of the end plate includes pushing the end portions of the end plate inwards under deformation of the deformation structure and supporting the end portions at the cell stack frame to reach the assembly position.

According to an aspect of the present disclosure, the method further includes pulling the plate element outwards, under deformation of the deformation structure, away from an interior space of the cell stack frame via engagement means disposed at a side of the plate element facing away from the cell stack, before inserting the cell stack into the cell stack frame, wherein the mounting of the end plate includes: releasing the engagement means and thereby the plate element such that the plate element is pushed inwards by the deformation structure into the assembly position.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
Fig. 1a is a top view illustrating the battery system according to an embodiment of the disclosure.
Fig. 2a-2c are views of the detail B of Fig. 1b showing the end plate in different positions.
Fig. 3a-3d illustrate a front view, top view, side view and perspective view of the end plate of the battery system of Fig. 1a in a pre-assembly position.
Fig. 4a-4d illustrate a front view, top view, side view and perspective view of the end plate of the battery system of Fig. 1a in an intermediate position.
Fig. 5a-5d illustrate a front view, top view, side view and perspective view of the end plate of the battery system of Fig. 1a in an assembly position.
Fig. 6a-6b illustrate a battery system with another embodiment of an end plate.
Fig. 7 illustrates a diagram showing a force to elongation (displacement) ratio for the battery system.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/-5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells, for example prismatic or pouch type battery cells. The battery cells are arranged to form a cell stack, for example by stacking the battery cells onto each other or arranging the battery cells in a row along a stacking axis. Cell spacers may be disposed in-between adjacent or neighboring battery cells. Thus, neighboring battery cells of the cell stack may be distanced from one another via a cell spacer. The cell stack may form one or more battery packs. The battery system may include multiple cell stacks.

The cell stack is disposed in a cell stack frame, that is inside an interior space of the cell stack frame. If the battery system includes multiple cell stacks, all the cell stacks may be disposed inside the same cell stack frame. At an end of the cell stack frame the end plate is arranged, for example at a longitudinal end of the cell stack. The cell stack frame may surround the at least one cell stack from four sides. Also, the cell stack frame and the end plate may in conjunction surround the at least one cell stack from at least four sides, wherein at one of the sides the end plate may be disposed. For example, the cell stack frame may include two side elements each extending parallel to the stacking axis and a first end element arranged at a first longitudinal end of the cell stack and interconnecting the two side elements while at a second longitudinal end of the cell stack a second end element may be disposed. The end plate may be arranged on the inside of one of the end elements. Also, the end plate may form one of the end elements. The battery system may include two end plates, one end plate arranged at each longitudinal end, wherein each end plate may be arranged inside of the respective end element of the cell stack frame or form the same. The end plate is configured to exert a pressure or force onto the cell stack. In the following, the terms pressure and force may be used interchangeably wherein pressure refers to the force per unit area. In order to exert the pressure onto the cell stack, the end plate is, in the assembly position, supported by the cell stack frame. In other words, the end plate with one portion pressed against a part of the cell stack frame, for example against an end element of the cell stack frame, and with another portion pressed against the cell stack. The end plate may be supported by one of the end elements of the cell stack frame and/or by one or both of the side elements of the cell stack frame.

The end plate according to the present disclosure includes a plate element and deformation structures extending from the plate element at opposite sides thereof. The plate element is plate-shaped to contact the cell stack at one end to compress the same. Thus, in the assembly position, the plate element is in contact with the cell stack, for example in planar contact with an outermost battery cell of the cell stack. The plate element may thus transfer the pressure from the deformation structures onto the cell stack. The plate element may be rigid, i.e. non-deformable. The deformation structures are the deformable part of the end plate. The deformation structures may extend (substantially) in parallel to each other from the end plate in the same direction along the stacking axis. The deformation structures may extend from the end plate outwards, i.e. away from the interior space accommodating the cell stack.

Each deformation structure includes or is formed by compression and extension portions. That is, each deformation structure includes at least one compression portion, i.e. the first compression portion, and one extension portion, i.e. the first extension portion. The deformation structure may include multiple compression and/or extension portions, for example two compression portions and one extension portion. The first compression portion and the first extension portion are connected with one another in series. In other words, the first compression portion and the first extension portion are arranged subsequently to another, one following the other. If the deformation structure includes multiple compression and/or extension portions, the compression and extension portions may be arranged alternately. That is, an extension portion is arranged subsequent to a compression portion which is arranged subsequent to an extension portion and so on. Further, the first compression portion and the first extension portion overlap each other in a direction perpendicular to the stacking axis and thus in a direction perpendicular to the force being applied by the end plate. If the deformation structure includes multiple compression and/or extension portions, all the compression and extension portions may overlap each other in said direction. As the first compression portion and the first extension portion are arranged in series and overlap each other, the first compression portion and the first extension portion may form a U-shape. As the deformation structure extends (substantially) parallel to the stacking axis, the first compression portion and the first extension portion may each extend parallel to the stacking axis. The first compression portion and the first extension portion are configured to compress and to extend, respectively, in response to a force acting in parallel to the stacking axis. In other words, the first compression portion and the first extension portion are configured to shorten and to elongate, respectively, in response to said force acting in parallel to the stacking axis.

The battery system may be assembled by placing the cell stack into the interior space of the cell stack frame and placing the end plate into its assembly position such that it exerts a pressure onto the cell stack. During such assembly, the deformation structure is deformed. In other words, the deformation structure is brought from a pre-assembly position, where the compression and extension portions are non-deformed, into the assembly position, where the compression and extension portions are deformed. In the assembly position, i.e. when the end plate has reached its intended position in the cell stack frame where the end plate is supported by the cell stack frame, the first compression portion is compressed and the first extension portion is extended so that the plate element exerts a pressure onto the cell stack. In other words, the deformation structure is configured to deform such that the compression portion is compressed while the extension portion is extended. The deformation structure thereby, using the cell stack frame as a support, exerts a pressure/force onto the plate element and the plate element exerts a pressure/force onto the cell stack. This way the cell stack is compressed and is reliably kept in the compressed state. A deformation force thereby acts on the compression portion compressing the compression portion and acts on the extension portion extending the extension portion. The deformed deformation structure, i.e. the deformed extension and compression portion, thereby exert a force/pressure onto the cell stack compressing the same.

The deformation structure is adapted to be, at lower compression forces (or smaller displacement ranges) elastically deformed and to be, at higher compression forces (or larger displacement ranges), plastically deformed. In other words, the end plate may be adapted, due to its deformation structure with the compression and extension portions, to deform linearly elastic in a first force/displacement range and linearly plastic in a second force/displacement range. The end plate may thus exhibit a suitable deformation characteristic for ensuring that the pressure onto the cell stack, i.e. the compression force acting onto the cell stack, is substantially constant over the lifetime of the cell stack. Thus, in contrast to current battery systems which may exhibit a rigid linear or progressive elastic pressure characteristic, the battery system according to the disclosure has, due to the end plate, a constant pressure characteristic in the relevant displacement range. In other words, the end plate, may exert a constant compression force onto the cell stack in the relevant, advantageous pre-tensioning force range for prismatic or pouch type cells. Inevitable tolerances for both the elements of the cell stack as well as the elements of the cell stack frame can be compensated by the inherent deformation ability of the end plate. This may eliminate the need of additional shimming or other adjustment work during cell stacking.

Further, any swelling (which may e.g. be due to ageing) of the battery cells of the cell stack may also be compensated. Also, loads which may occur during accidents may be compensated. Due to said tolerances and swelling, a length of the cell stack may vary. However, the end plate may exert substantially the same pressure onto the cell stack independent of the changes in length of the cell stack. Thus, the cell stack may be kept in the optimum range of pressure for peak performance ensuring reliable and safe operation through all its life cycle until end of life. Due to the deformation structures, the end plate may always be mounted at the same fixture position without adjustments while keeping the pressure onto the cell stack in the desired range. Thus, in summary, the battery system is capable of compensating production tolerances as well as swelling forces/displacements of the battery cells over the lifetime of the battery system because the end plate is adapted to maintain a substantially constant pressure.

According to an embodiment, at least one of the first compression portion and the first extension portion includes a grid structure. For example, both the first compression portion and the first extension portion may include a grid structure. If the deformation structure includes multiple compression portions and/or extension portions, all of the compression and extension portions may include a grid structure. The grid structure is a structure forming a grid or lattice. That is, the grid structure may include intersecting grid line elements delimiting grid cells. Such a grid structure may provide the above-explained deformation characteristic to the extension and compression portions. That is, the extension and compression portions may extend and compress such that, due to the grid structure, the intended elastic deformation at lower compression forces/displacement and the plastic deformation at higher compression forces/displacement is achieved in a structurally simple manner.

According to an embodiment, the grid structure includes deformable arms delimiting grid cells and adapted to deform under influence of a deformation force. The deformable arms may thereby form the above-mentioned grid line elements. The deformable arms of the first compression portion are adapted to deform such that a volume of the grid cells of the first compression portion is reduced. The deformable arms of the first extension portion are adapted to deform such that a volume of the grid cells of the first extension portion is increased. When the end plate is brought into the assembly position, the deformable arms deform as such. That is, when the end plate is placed into its final position in the cell stack frame, the end plate is supported by the cell stack frame such that the deformation force is exerted onto the compression and extension portions and therefore the deformable arms. As a consequence, the grid cells of the first compression portion are reduced in size which means the first compression portion is compressed. Accordingly, the grid cells of the first extension portion are enlarged in size which means the first extension portion is extended. Such a grid structure may provide the above-explained, intended deformation characteristic to the extension and compression portions. That is, the extension and compression portions may extend and compress such that, due to the grid structure, the elastic deformation at lower compression forces/displacement and the plastic deformation at higher compression forces/displacement is achieved in a structurally simple manner.

According to an embodiment, the second compression portion includes a grid structure. The above explanations made with respect to the grid structure of the first compression portion and/or the first extension portion apply correspondingly. For example, the grid structure may include deformable arms delimiting grid cells and adapted to deform under influence of the deformation force, wherein, in the assembly position of the end plate, the deformable arms of the second compression portion deform such that a volume of the grid cells of the second compression portion is reduced.

According to an embodiment, the deformation structure is S-shaped including the first compression portion, the first extension portion and a second compression portion arranged in series and overlapping each other. As mentioned above, the deformation structure may include multiples extension and/or compression portions. In the present embodiment, the deformation structure may include two extension portions and one compression portion. These portions may be arranged in series such that the first compression portion is arranged subsequent to the first extension portion and the second extension portion is arranged subsequent to the first compression portion. Such an S-shaped deformation structure may provide the above-explained deformation characteristic.

According to an embodiment, the end plate includes snap-fit portions adapted to snap into corresponding recesses of the cell stack frame in the assembly position of the end plate. That is, the cell stack frame may include recesses that are adapted to receive the snap-fit portions of the end plate. For example, an end element of the cell stack frame, next to which the end plate may be arranged, may include these recesses. The end plate may thus, in the assembly position, be supported by the end element of the cell stack frame. The snap-fit portions may be arranged at or may form free ends of the end plate, for example of each of the deformation structures. In other words, the snap-fit portions may be end portions of the end plate, each end portion being disposed at a free end of one of the deformation structures. When deforming the deformation structures during assembly, the snap-fit portions may be placed into their respective recesses in the cell stack frame such that the end plate is supported by the cell stack frame and exerts the above-explained intended pressure onto the cell stack. Such a snap-fit may provide for a constructively simple end plate. Additional fixation means, such as bolts or screws, for fixing the end plate to the cell stack frame may be omitted.

According to an embodiment, the end plate includes two end portions, one at each free end of the deformation structures. The end portions may be adapted to be pushed inwards towards the plate element from a pre-assembly position, in which the end portions extend through apertures in the cell stack frame, to the assembly position, where the end portions are supported at the cell stack frame. The apertures may be through-holes extending through an end element of the cell stack frame. The end portions may be pushed inwards via a deformation force back through the apertures in the cell stack frame towards the interior space and thus towards the cell stack, wherein the deformation structures deform in the above-explained manner. The end portions may be supported at the cell stack frame such that the end plate is supported at the cell stack frame in the above-explained manner, i.e. such that the intended deformation characteristic is achieved. As mentioned, the snap-fit portions may be arranged at or may form the end portions. During assembly, the end plate may be inserted into the interior space formed by the cell stack frame such that the end portions, and possibly parts of the deformation structure, extend through the apertures in the cell stack frame to the outside. Subsequently, the cell stack may be placed into the interior space of the cell stack frame, for example without pre-compression. Subsequently, the end portions of the end plate may be pushed from the outside of the cell stack frame through the apertures into the cell stack frame and may be supported by the cells stack frame, e.g. by an inner side of the end element of the cell stack frame. Thereby, the end plate is pressed against the cell stack in the above-explained intended manner. Such an embodiment may, for example, be advantageous in combination with the S-shaped deformation structure. The above-explained deformation characteristic may thus be achieved in a simple manner without having to pre-compress the cell stack.

According to an embodiment, the end plate includes engagement means disposed at a side of the plate element facing away from the cell stack or, in other words, facing away from the interior space of the cell stack frame. The plate element is adapted to be pulled outwards via the engagement means, under deformation of the deformation structure, away from the interior space of the cell stack frame to insert the battery cells into the interior space of the cell stack frame, wherein the plate element is further adapted to be pushed inwards by the deformation structure into the assembly position when the plate element is released. During assembly, the end plate may be manually pulled outwards via the engagement means thereby transitioning from a pre-assembly position into an intermediate position in which the deformation structure is deformed. Subsequently, the cell stack may be placed into the interior space of the cell stack frame with or without pre-compression. Subsequently, the engagement means and thus plate element is released which results in the deformation structure pressing the plate element against the cell stack in the above-explained intended manner. Such an embodiment may, for example, be advantageous in combination with the U-shaped deformation structure.

According to an embodiment, the end plate is formed as one-piece from a sheet material. For example, the end plate may be formed from sheet metal. Thus, the plate element and the deformation structure with the compression and extension portions may be formed as one-piece. In other words, the plate element and the deformation structure with the compression and extension portions, and possibly the end portions, snap-fit portions, may all form integral parts of the end plate. The end plate may thus be formed by processing a single sheet metal, for example by deep-drawing, bending, folding and/or cutting the sheet metal. The end plate may be formed without any connecting means such as rivets, or screws and without welding. The sheet metal may e.g. be an aluminum sheet or a (pressed) steel sheet. The end plate being formed as one-piece from a sheet material may provide for a simple manufacturing while providing stability and flexibility to the end plate and may ensure that the deformation structures exhibit the intended deformation characteristic.

An embodiment pertains to an end plate as explained above. That is, according to an embodiment, an end plate is provided for exerting pressure onto a cell stack of battery cells of a battery system. The end plate includes a plate element for contacting the cell stack and deformation structures extending from the plate element at opposite sides thereof parallel to the stacking axis, each deformation structure including a first compression portion and a first extension portion that are connected in series and are arranged overlapping each other in a direction perpendicular to the stacking axis, wherein the end plate is adapted to, in an assembly position, be supported by a cell stack frame of the battery system such that, while the first compression portion is compressed and the first extension portion is extended, the plate element exerts a pressure onto the cell stack. The above explanations and embodiments regarding the battery system are also valid for the end plate. The end plate, when in an assembled position in a battery system, therefore provides for the above-explained deformation characteristic.

The disclosure also pertains to an electric vehicle including a battery system according to the disclosure, i.e. a battery system as explained above.

According to one aspect of the present disclosure, a method for assembling a battery system according to the disclosure, i.e. a battery system as explained above, may be provided. Therein, the battery cells may be stacked along the stacking axis to form the cell stack. Then, the cell stack may be inserted into the cell stack frame and the end plate mounted at the cell stack frame such that, while the first compression portion is compressed and the first extension portion is extended, the plate element exerts a pressure onto the cell stack. The end plate may be placed first inside the cell stack frame and the cell stack subsequently or the other way around. Thereby, the above-explained deformation characteristic may be achieved. The above explanations and embodiments regarding the battery system are also valid for the assembly method.

According to an embodiment, the method includes: inserting, before inserting the cell stack into the cell stack frame, the end plate into the cell stack frame such that end portions disposed at respective free ends of the deformation structures extend through apertures in the cell stack frame. Afterwards, the cell stack may be inserted into the cell stack frame, e.g. without pre-compression. Afterwards, the end plate may be mounted, wherein the mounting of the end plate may include pushing the end portions of the end plate inwards under deformation of the deformation structure and supporting the end portions at the cell stack frame to reach the assembly position, as explained above.

According to an embodiment, the method includes: pulling, before inserting the cell stack into the cell stack frame, the plate element outwards, under deformation of the deformation structure, away from an interior space of the cell stack frame via engagement means disposed at a side of the plate element facing away from the cell stack. Afterwards, the cell stack may be inserted into the cell stack frame, e.g. with or without pre-compression. Afterwards, the end plate may be mounted, wherein the mounting of the end plate may include releasing the engagement means and thereby the plate element such that the plate element is pushed inwards elastically by the deformation structure into the assembly position, as explained above.

### Specific Embodiments

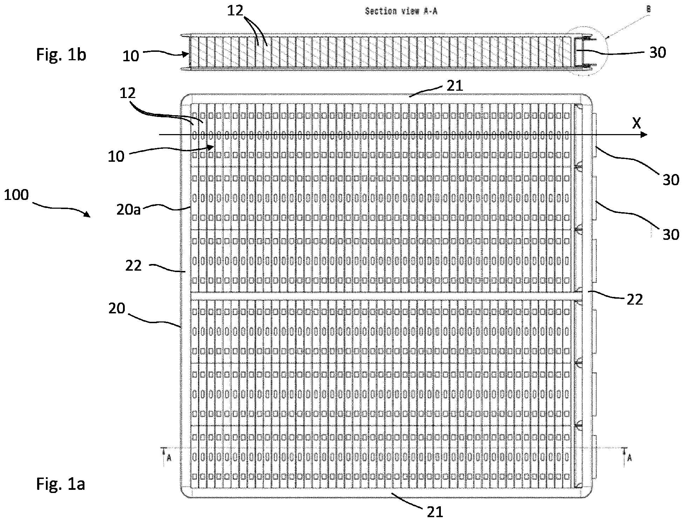

Fig. 1a is a top view showing a battery system 100 according to an embodiment of the disclosure. The battery system 100 includes multiple cell stacks 10, each including a plurality of battery cells 12 arranged along a respective stacking axis X. The cell stacks 10 are placed inside an interior space of a cell stack frame 20 via an opening 20a of the cell stack frame 20. The cell stack frame 20 includes side elements 21 and end elements 22 which together surround the cell stacks 10. End plates 30 are disposed at a longitudinal end of cell stack frame 20 inwardly of one of the end elements 22. The end plates 30, in their assembly positions, are supported at the cell stack frame 20 thereby exerting a pressure onto the respective cell stack 10 as will be explained in detail in the following with respect to one of the end plates 30.

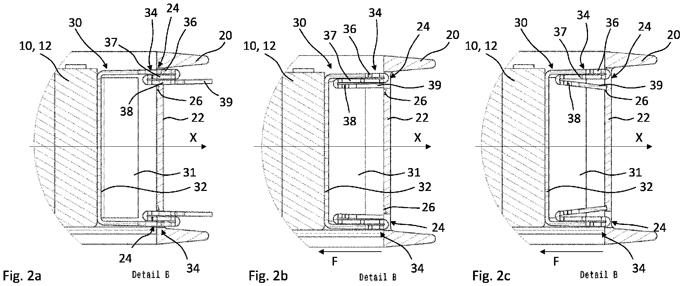

The end plate 30 includes a four-sided plate element 32 disposed perpendicular to the stacking axis X and deformation structures 34 extending from the plate element 32 at opposite sides thereof parallel to the stacking axis X as shown in Figures 2 and 3 to 5. The deformation structures 34 extend away from the plate element 32. Further, the end plate 30 includes side extensions 31 at the other two opposite sides thereof, the side extensions 31 also extending parallel to the stacking axis X. Each deformation structure 34 includes a first compression portion 36, a first extension portion 37 and a second compression portion 38 that are connected in series and are arranged overlapping each other in a direction perpendicular to the stacking axis X. The deformation structures 34 are thus S-shaped.

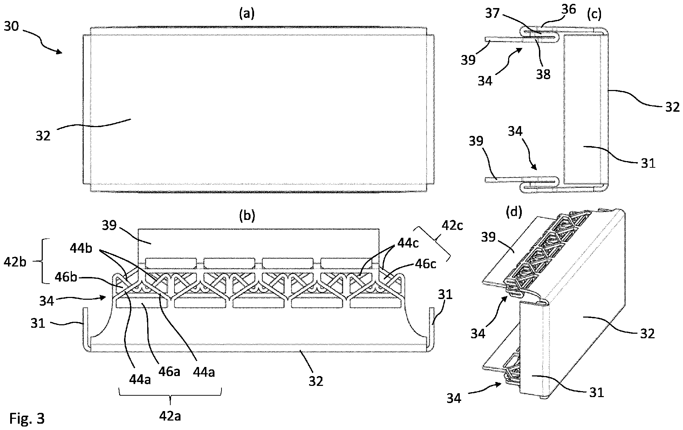

The first compression portion 36, the first extension portion 37 and the second compression portion 38 each include grid-structures as can be seen in Figures 3 to 5. The first compression portion 36 includes a first grid structure 42a with deformable arms 44a that delimit grid cells 46a, the first extension portion 37 includes a second grid structure 42b with deformable arms 44b that delimit grid cells 46b, and the second compression portion 38 includes a third grid structure 42c with deformable arms 44c that delimit grid cells 46c.

End portions 39 are disposed at free ends of the deformation structures 34, the end portions 39 forming snap-fit portions adapted to snap into corresponding recesses 26 in one of the end elements 22 of the cell stack frame 20.

The end plate 30 may be formed as one-piece from a sheet metal, for example via deep-drawing, bending, folding and/or cutting the sheet metal. Additional joining operations such as welding or clinching can be used to increase the cohesion of the end plates in desired sections.

Figure 2a and 3 show the end plate 30 in a pre-assembly position. In this pre-assembly position, the end plate 30 is inserted into the interior space of the cell stack frame 20 such that the end portions 39 and in part also the deformation structures 34 extend through apertures 24 in the end element 22 of the cell stack frame 20, see Figure 2a. With the end plate 30 in this pre-assembly position, the cell stack 10 is inserted into the interior space of the cell stack frame 20, for example without any pre-compression of the battery cells 12 of the cell stack 10. In the pre-assembly position, the end plates 30 may all be at their outermost position allowing for a maximum length cell stack 10 to be dropped in easily into the cell stack frame 20.

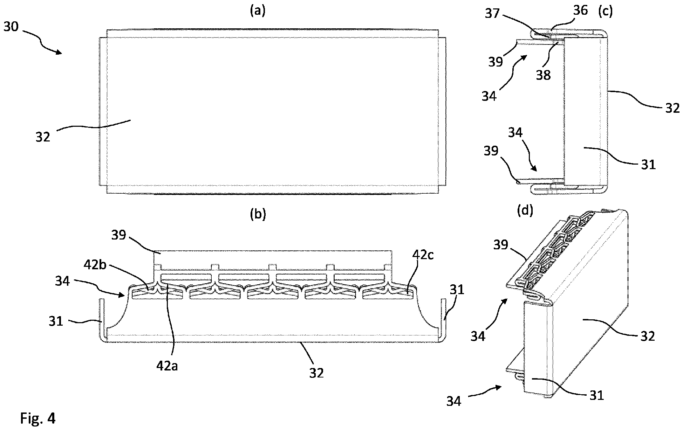

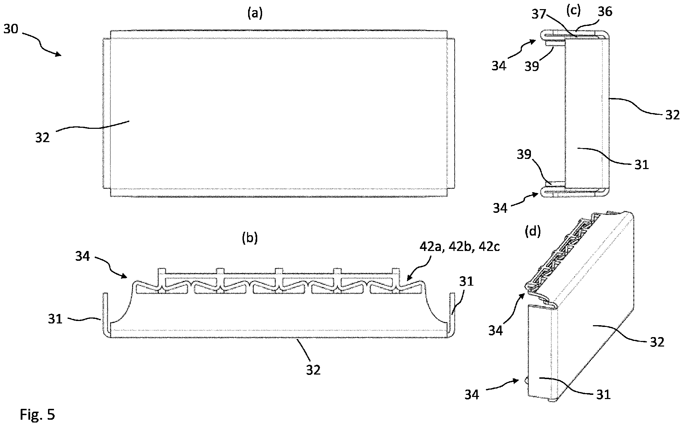

After the cell stack 10 is inserted, the end portions 39 of the end plate 30 are pushed inwards by the mechanic exerting a deformation force F onto the deformation structure 34, for example with the help of a suitable tool, such that the deformation structures 34 deform. This pre-assembly position is shown in Figure 2b and 4. The end portions 39 are then placed into the recesses 26 and the end plate 30 thus transitions into the assembly position in which the deformation structures 34 are kept in the deformed state, see Figure 2c and 5.

In more detail, during the deformation of the respective deformation structure 34, the first compression portion 36 is compressed, the first extension portion 37 is extended, and the second compression portion 38 is compressed as well. Thereby the grid structures 42a, 42b, 42c are deformed. That is, the deformable arms 44a of the first grid structure 42a are deformed such that a volume of the grid cells 46a of the first compression portion 36 is reduced. Correspondingly, the deformable arms 44c of the third grid structure 42c are deformed such that the grid cells 46c of the second compression portion 38 are reduced in size. Further, the deformable arms 44b of the second grid structure 42b are deformed such that a volume of the grid cells 46b of the first extension portion 37 is enlarged, see Figures 2b, 2c, 4 and 5.

Thus, in the assembly position, the end plate 30 is supported by the cell stack frame 20 such that, while the first and second compression portions 36, 38 are compressed and the first extension portion 37 is extended, the plate element 32 exerts a pressure onto the cell stack 10. In other words, when the design pressure/force of the end plate 30 on the battery cells 12 is reached, the cell-facing side of the end plate 30 holds the position while the end portions 39 may be further moved inside until the designated assembly position is reached, thereby continuously deforming the deformation structures 34 and thus the gridlike sections.

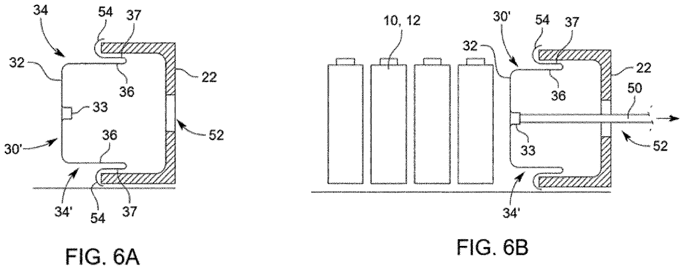

Figures 6a and 6b show an alternative embodiment of an end plate 30' having differently formed deformation structures 34'. Such end plates 30' may also be used with the battery system 100 of Figure 1. The deformation structures 34' of this end plate include only the first compression portion 36 and the first extension portion 37 that are connected in series and are arranged overlapping each other in a direction perpendicular to the stacking axis X and are thus U-shaped.

The plate element 32 includes engagement means 33 disposed at a side of the plate element 32 facing away from the interior space of the cell stack frame 20. The end plate 30' is supported by the cell stack frame 20 via support sections 54 at the end of the deformation structures 34'. Figure 6a shows the end plate 30' in a pre-assembly position. The plate element 32 is adapted to be pulled outwards via the engagement means 33 away from the interior space of the cell stack frame 20 to insert the battery cells into the interior space of the cell stack frame 20. For example, the plate element 32 may be pulled away via a suitable tool 50 that is inserted through a through-hole 52 in the end element 22, see Figure 6b. Thereby the deformation structures 34' are deformed, that is the first compression portion 36 is compressed and the first extension portion 37 is extended. The first compression portion 36 and the first extension portion 37 may also include grid structures such as in the prior embodiment. The cell stack 10 may be inserted with or without pre-compression, depending on how far the plate element 32 is pulled outwards. By pulling outwards the end plate 32, the interior space of the cell stack frame 20 is enlarged so that the cell stack 10 may be inserted. A required opening size of the cell stack frame 20 may be determined from measuring each cell stacks length in its non-compressed state of after it has been compressed to the target pressure.

After insertion of the cell stack 10, the plate element 32 may be released and is thus pushed inwards by the deformation structures 34 into the assembly position, see Figure 6b. In the assembly position, the end plate 30' is thus supported by the cell stack frame 20 via the support sections 54 such that, while the first compression portion 36 is compressed and the first extension portion 37 is extended, the plate element 32 exerts a pressure onto the cell stack 10.

The end plate 30' may be formed as one-piece from a sheet metal, for example via deep-drawing, bending, folding and/or cutting the sheet metal. Additional joining operations such as welding or clinching can be used to increase the cohesion of the end plates in desired sections.

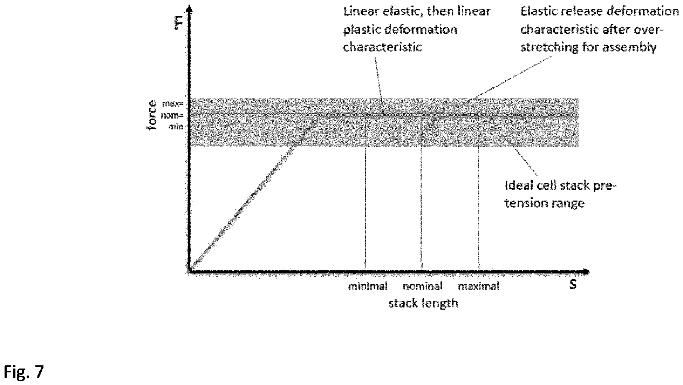

In contrast to current battery systems which may exhibit a rigid linear or progressive elastic pressure characteristic, the end plates 30, 30' according to the disclosure have, due to the deformation structures 34, 34', at lower compression forces/displacement, an elastic deformation characteristic and, at higher compression forces/displacement, a plastic deformation characteristic. The plastic deformation characteristic has a flat force-displacement-inclination in the relevant, advantageous pre-tensioning force range for prismatic or pouch type cells as shown in Fig. 7.

Fig. 7 illustrates a diagram showing a force F to elongation (displacement) s ratio for the end plates 30, 30' including the deformation structures 34, 34'. As shown, the exerted force F increases linearly (elastic deformation) with the elongation s (and thus stack length L) in a first section, at lower displacement, and stays constant (plastic deformation) in a second section, at higher displacements. The force (and thus the pressure) exerted by the end plate 30 is regulated by the extension and compression portions of the deformation structures 34 such that the force stays within a window or range of an ideal cell stack pre-tension. A slight drop in pre-tension is possible when locking the end plate into the assembly position, i.e. during the snap-in, as shown in Figure 7 for the nominal stack length.

Thus, the end plates 30, 30' may, due to the deformation structures 34, 34', exert a constant compression force onto the cell stack 10 and is thus capable of compensating production tolerances as well as swelling forces/displacements of the battery cells over the lifetime of the battery system. The end plates 30, 30' are designed such that the min-max cell stack tolerances are in the flat plateau area of the force/deflection curve as shown in Fig. 7. Thus, the cell stack 10 may be kept in the optimum range of pressure for peak performance ensuring reliable and safe operation through all its life cycle until end of life.

### Reference signs

- 10: cell stack
- 12: battery cells
- 20: cell stack frame
- 21: side elements
- 22: end elements
- 24: apertures
- 26: recesses
- 30, 30': end plate(s)
- 31: side extensions
- 32: plate element
- 33: engagement means
- 34, 34': deformation structures
- 36: first compression portion
- 37: first extension portion
- 38: second compression portion
- 39: end portions
- 42a: first grid structure
- 42b: second grid structure
- 42c: third grid structure
- 44a, 44b, 44c: deformable arms
- 46a, 46b, 46c: grid cells
- 50: tool
- 52: through-hole
- 54: support sections
- 100: battery system
- X: stacking axis

## Claims

1. A battery system (100) comprising a plurality of battery cells (12) arranged along a stacking axis (X) to form a cell stack (10), a cell stack frame (20) accommodating the cell stack (10), and an end plate (30, 30') disposed at an end of cell stack frame (20), the end plate (30, 30') comprising a plate element (32) in contact with the cell stack (10) and deformation structures (34, 34') extending from the plate element (32) at opposite sides thereof parallel to the stacking axis (X), each deformation structure (34, 34') comprising a first compression portion (36) and a first extension portion (37) that are connected in series and are arranged overlapping each other in a direction perpendicular to the stacking axis (X), wherein the end plate (30, 30'), in an assembly position, is supported by the cell stack frame (20) such that, while the first compression portion (36) is compressed and the first extension portion (37) is extended, the plate element (32) exerts a pressure onto the cell stack (10).

2. The battery system (100) as claimed in claim 1, wherein at least one of the first compression portion (36) and the first extension portion (37) comprises a grid structure (42a, 42b).

3. The battery system (100) as claimed in claim 2, wherein the grid structure (42a, 42b) includes deformable arms (44a, 44b) delimiting grid cells (46a, 46b) and adapted to deform under influence of a deformation force, wherein, in the assembly position of the end plate (30, 30'), the deformable arms (44a) of the first compression portion (36) deform such that a volume of the grid cells (46a) of the first compression portion (36) is reduced and the deformable arms (44b) of the first extension portion (37) deform such that a volume of the grid cells (46b) of the first extension portion (37) is increased.

4. The battery system (100) as claimed in any one of the preceding claims, wherein the deformation structure (34) is S-shaped comprising the first compression portion (36), the first extension portion (37) and a second compression portion (38) arranged in series and overlapping each other.

5. The battery system (100) as claimed in claim 4, the second compression portion (38) comprises a grid structure (42c).

6. The battery system (100) as claimed in claim 5, wherein the grid structure (42c) includes deformable arms (44c) delimiting grid cells (46c) and adapted to deform under influence of the deformation force, wherein, in the assembly position of the end plate (30, 30'), the deformable arms (44c) of the second compression portion (38) deform such that a volume of the grid cells (46c) of the second compression portion (38) is reduced.

7. The battery system (100) as claimed in any one of the preceding claims, wherein the end plate (30) comprises snap-fit portions adapted to snap into corresponding recesses (26) of the cell stack frame (20) in the assembly position of the end plate (30).

8. The battery system (100) as claimed in any one of the preceding claims, wherein the end plate (30) comprises end portions (39) each disposed at a free end of one of the deformation structures (34), wherein the end portions (39) are adapted to be pushed inwards towards the plate element (32) from a pre-assembly position, in which the end portions (39) extend through apertures (24) in the cell stack frame (20), to the assembly position, where the end portions (39) are supported at the cell stack frame (20).

9. The battery system (100) as claimed in any one of the preceding claims, wherein the end plate (30') comprises engagement means (33) disposed at a side of the plate element (32) facing away from the cell stack (10), wherein the plate element (32) is adapted to be pulled outwards via the engagement means (33), under deformation of the deformation structure (34'), away from an interior space of the cell stack frame (20) to insert the battery cells (12) into the interior space of the cell stack frame (20), wherein the plate element (32) is further adapted to be pushed inwards by the deformation structure (34') into the assembly position when the plate element (32) is released.

10. The battery system (100) as claimed in any one of the preceding claims, wherein the end plate (30, 30') is formed as one-piece from a sheet material, for example from sheet metal.

11. An end plate (30, 30') for exerting pressure onto a cell stack (10) of battery cells (12) of a battery system (100), the end plate (30, 30') comprising a plate element (32) for contacting the cell stack (10) and deformation structures (34, 34') extending from the plate element (32) at opposite sides thereof parallel to the stacking axis (X), each deformation structure (34, 34') comprising a first compression portion (36) and a first extension portion (37) that are connected in series and are arranged overlapping each other in a direction perpendicular to the stacking axis (X), wherein the end plate (30, 30') is adapted to, in an assembly position, be supported by a cell stack frame (20) of the battery system (100) such that, while the first compression portion (36) is compressed and the first extension portion (37) is extended, the plate element (32) exerts a pressure onto the cell stack (10).

12. An electric vehicle including the battery system (100) as claimed in any one of claims 1 to 10.

13. A method for assembling a battery system (100) as claimed in any one of claims 1 to 10, wherein the method comprises the steps of:
- stacking the battery cells (12) along the stacking axis (X) to form the cell stack (10);
- inserting the cell stack (10) into the cell stack frame (20);
- mounting the end plate (30, 30') at the cell stack frame (20) such that, while the first compression portion (36) is compressed and the first extension portion (37) is extended, the plate element (32) exerts a pressure onto the cell stack (10).

14. The method as claimed in claim 13, wherein the method further comprises: inserting the end plate (30) into the cell stack frame (20) such that end portions (39) disposed at respective free ends of the deformation structures (34) extend through apertures (24) in the cell stack frame (20), before inserting the cell stack (10) into the cell stack frame (20); wherein the mounting of the end plate comprises: pushing the end portions (39) of the end plate (30) inwards under deformation of the deformation structure (34) and supporting the end portions (39) at the cell stack frame (20) to reach the assembly position.

15. The method as claimed in claim 13, wherein the method further comprises: pulling the plate element (32) outwards, under deformation of the deformation structure (34'), away from an interior space of the cell stack frame (20) via engagement means (33) disposed at a side of the plate element (32) facing away from the cell stack (10), before inserting the cell stack (10) into the cell stack frame (20); wherein the mounting of the end plate (30') comprises: releasing the engagement means (33) and thereby the plate element (32) such that the plate element (32) is pushed inwards by the deformation structure (34') into the assembly position.

## Amended claims

### Amended claims in accordance with Rule 137(2) EPC.

1. A battery system (100) comprising a plurality of battery cells (12) arranged along a stacking axis (X) to form a cell stack (10), a cell stack frame (20) accommodating the cell stack (10), and an end plate (30, 30') disposed at an end of cell stack frame (20), the end plate (30, 30') comprising a plate element (32) in contact with the cell stack (10) and deformation structures (34, 34') extending from the plate element (32) at opposite sides thereof parallel to the stacking axis (X), each deformation structure (34, 34') comprising a first compression portion (36) and a first extension portion (37) that are connected in series and are arranged overlapping each other in a direction perpendicular to the stacking axis (X), wherein the end plate (30, 30'), in an assembly position, is supported by the cell stack frame (20) such that, while the first compression portion (36) is compressed and the first extension portion (37) is extended, the plate element (32) exerts a pressure onto the cell stack (10).

2. The battery system (100) as claimed in claim 1, wherein at least one of the first compression portion (36) and the first extension portion (37) comprises a grid structure (42a, 42b).

3. The battery system (100) as claimed in claim 2, wherein the grid structure (42a, 42b) includes deformable arms (44a, 44b) delimiting grid cells (46a, 46b) and adapted to deform under influence of a deformation force, wherein, in the assembly position of the end plate (30, 30'), the deformable arms (44a) of the first compression portion (36) deform such that a volume of the grid cells (46a) of the first compression portion (36) is reduced and the deformable arms (44b) of the first extension portion (37) deform such that a volume of the grid cells (46b) of the first extension portion (37) is increased.

4. The battery system (100) as claimed in any one of the preceding claims, wherein the deformation structure (34) is S-shaped comprising the first compression portion (36), the first extension portion (37) and a second compression portion (38) arranged in series and overlapping each other.

5. The battery system (100) as claimed in claim 4, the second compression portion (38) comprises a grid structure (42c).

6. The battery system (100) as claimed in claim 5, wherein the grid structure (42c) includes deformable arms (44c) delimiting grid cells (46c) and adapted to deform under influence of the deformation force, wherein, in the assembly position of the end plate (30, 30'), the deformable arms (44c) of the second compression portion (38) deform such that a volume of the grid cells (46c) of the second compression portion (38) is reduced.

7. The battery system (100) as claimed in any one of the preceding claims, wherein the end plate (30) comprises snap-fit portions adapted to snap into corresponding recesses (26) of the cell stack frame (20) in the assembly position of the end plate (30).

8. The battery system (100) as claimed in any one of the preceding claims, wherein the end plate (30) comprises end portions (39) each disposed at a free end of one of the deformation structures (34), wherein the end portions (39) are adapted to be pushed inwards towards the plate element (32) from a pre-assembly position, in which the end portions (39) extend through apertures (24) in the cell stack frame (20), to the assembly position, where the end portions (39) are supported at the cell stack frame (20).

9. The battery system (100) as claimed in any one of the preceding claims, wherein the end plate (30') comprises engagement means (33) disposed at a side of the plate element (32) facing away from the cell stack (10), wherein the plate element (32) is adapted to be pulled outwards via the engagement means (33), under deformation of the deformation structure (34'), away from an interior space of the cell stack frame (20) to insert the battery cells (12) into the interior space of the cell stack frame (20), wherein the plate element (32) is further adapted to be pushed inwards by the deformation structure (34') into the assembly position when the plate element (32) is released.

10. The battery system (100) as claimed in any one of the preceding claims, wherein the end plate (30, 30') is formed as one-piece from a sheet material, for example from sheet metal.

11. An end plate (30, 30') for exerting pressure onto a cell stack (10) of battery cells (12) of a battery system (100) as claimed in any one of claims 1 to 10, the end plate (30, 30') comprising a plate element (32) for contacting the cell stack (10) and deformation structures (34, 34') extending from the plate element (32) at opposite sides thereof parallel to the stacking axis (X), each deformation structure (34, 34') comprising a first compression portion (36) and a first extension portion (37) that are connected in series and are arranged overlapping each other in a direction perpendicular to the stacking axis (X), wherein the end plate (30, 30') is adapted to, in an assembly position, be supported by a cell stack frame (20) of the battery system (100) such that, while the first compression portion (36) is compressed and the first extension portion (37) is extended, the plate element (32) exerts a pressure onto the cell stack (10).

12. An electric vehicle including the battery system (100) as claimed in any one of claims 1 to 10.

13. A method for assembling a battery system (100) as claimed in any one of claims 1 to 10, wherein the method comprises the steps of:
- stacking the battery cells (12) along the stacking axis (X) to form the cell stack (10);
- inserting the cell stack (10) into the cell stack frame (20);
- mounting the end plate (30, 30') at the cell stack frame (20) such that, while the first compression portion (36) is compressed and the first extension portion (37) is extended, the plate element (32) exerts a pressure onto the cell stack (10).

14. The method as claimed in claim 13, wherein the method further comprises: inserting the end plate (30) into the cell stack frame (20) such that end portions (39) disposed at respective free ends of the deformation structures (34) extend through apertures (24) in the cell stack frame (20), before inserting the cell stack (10) into the cell stack frame (20); wherein the mounting of the end plate comprises: pushing the end portions (39) of the end plate (30) inwards under deformation of the deformation structure (34) and supporting the end portions (39) at the cell stack frame (20) to reach the assembly position.

15. The method as claimed in claim 13, wherein the method further comprises: pulling the plate element (32) outwards, under deformation of the deformation structure (34'), away from an interior space of the cell stack frame (20) via engagement means (33) disposed at a side of the plate element (32) facing away from the cell stack (10), before inserting the cell stack (10) into the cell stack frame (20); wherein the mounting of the end plate (30') comprises: releasing the engagement means (33) and thereby the plate element (32) such that the plate element (32) is pushed inwards by the deformation structure (34') into the assembly position.
